# NEUE EUROPÄISCHE PATENTSCHRIFT

(11) **EP 1 216 375 B2**
(45) Veröffentlichungstag und Bekanntmachung des Hinweises auf die Entscheidung über den Einspruch: **01.03.2006**
(45) Hinweis auf die Patenterteilung: 02.05.2003
(21) Anmeldenummer: 00981138.1
(22) Anmeldetag: 28.09.2000
(51) Int. Cl.: F16K 37/00

(54) **DIAGNOSESYSTEM UND -VERFAHREN, INSBESONDERE FÜR EIN VENTIL**
DIAGNOSTIC SYSTEM AND METHOD, ESPECIALLY FOR A VALVE
SYSTEME ET PROCEDE DE DIAGNOSTIC, NOTAMMENT POUR SOUPAPE

(30) Priorität: 30.09.1999 DE 19947129
(43) Veröffentlichungstag der Anmeldung: 26.06.2002
(73) Patentinhaber: SIEMENS AKTIENGESELLSCHAFT, 80333 München (DE)
(72) Erfinder: FIEBELKORN, Klaus, 76872 Minfeld (DE); KLEBERT, Gerhard, 76332 Bad Herrenalb (DE); PÜTTMER, Alf, 76135 Karlsruhe (DE)
(86) Internationale Anmeldenummer: PCT/DE2000/003428
(87) Internationale Veröffentlichungsnummer: WO 2001/025662

(56) Entgegenhaltungen:
- EP-A- 0 637 713
- EP-A- 0 742 372
- US-A- 5 416 724
- PATENT ABSTRACTS OF JAPAN vol. 014, no. 238 (P-1050), 21. Mai 1990 (1990-05-21) & JP 02 059637 A (ISHIKAWAJIMA HARIMA HEAVY IND CO LTD), 28. Februar 1990 (1990-02-28)
- PATENT ABSTRACTS OF JAPAN vol. 006, no. 109 (M-137), 19. Juni 1982 (1982-06-19) & JP 57 040185 A (YONEKURA RYOZO), 5. März 1982 (1982-03-05)
- PATENT ABSTRACTS OF JAPAN vol. 016, no. 586 (P-1463), 25. Dezember 1992 (1992-12-25) & JP 04 235390 A (TOSHIBA CORP), 24. August 1992 (1992-08-24)
- "Intrinsically Safe Portable Leak Detector Model 5131 User's Manual", REV 1, June 1995, Physical Acoustics Corporation
- "Investigations in Respect to the Determination of Cavitation Intensity by the Means of Acoustic Signals", presented during the "Colloque d'hydrotechnique", Session N° 144, March 19, 1992, by B. Stoffel & W. Schuller

## Beschreibung

Die Erfindung betrifft ein Diagnosesystem sowie ein Diagnoseverfahren für ein von einem Stellungsregler über einen Antrieb betätigbares Ventil nach dem Oberbegriff des Anspruchs 1 bzw. dem Oberbegriff des Anspruchs 9.

In vielen Bereichen der Prozeß- und Energietechnik hängt der storungsfreie Betrieb einer Anlage von der einwandfreien Funktion der eingesetzten Steuer- und Sperrventile ab. Zur Vermeidung kostenintensiver, irregulärer Betriebsunterbrechungen sollten Ventilschäden möglichst bereits im Anfangsstadium erkannt werden, d. h. bevor ein Ausfall eines Ventils einen Stillstand der Anlage verursachen kann. Beispielsweise führen defekte Ventilsitze zu Leckströmungen, die eine breitbandige Schallemission erzeugen. Eine Aufnahme und Auswertung der Schallemission eines Ventils kann somit zur Früherkennung von Ventilschäden dienen. Da Ventilfehler somit zu Schäden und teuren Folgekosten führen können, ist eine Diagnose eventuell mit automatischer Erfassung und programmierbarer Bewertung der Fehlervon großem Nutzen. Statistische Auswertungen der Diagnosedaten können sowohl zur Optimierung der Wartungsprozesse und dem rechtzeitigen Ersatz eines schadhaften Ventils als auch zur qualitativen Beurteilung und Klassifizierung der Ventilhersteller oder zur Beurteilung der Eignung bestimmter Ventile für verschiedene Prozeßarten dienen.

Aus der EP 0 637 713 A1 ist ein Diagnosesystem bekannt mit einem Körperschallsensor, der am Gehäuse eines Ventils angebracht ist und dessen Signal einer Einrichtung zur Erfassung und Speicherung von Körperschallspektren zugeführt wird. Bei intaktem Ventil und bei defektem Ventil ergeben sich untersch iedliche Verläufe des Schallpegels über der Frequenz. Durch Bilden des Flächenintegrals und Vorgeben einer tolerierbaren Abweichung kann ein schadhaftes Ventil erkannt werden, wobei sich durch diese Messung insbesondere Verschleiß, der durch Korrosion, Kavitation oder Erosion verursacht ist, feststellen läßt. Zur Beurteilung wird das Körperschallspektrum in einem Frequenzbereich zwischen 2 kHz und 10 kHz ausgewertet.

In der deutschen Gebrauchsmusteranmeldung mit dem amtlichen Aktenzeichen 299 12 847.4 wird ein Schallaufnehmer, insbesondere ein Ultraschallaufnehmer zur akustischen Ventildiagnose, vorgeschlagen mit einem im wesentlichen topfförmigen Gehäuse, in dessen Inneren ein piezoelektrisches Meßelement angeordnet ist. Zur Verbesserung der Unempfindlichkeit gegenüber elektromagnetischen Feldern ist eine Abschirmung mit einer Hülse vorgesehen, deren eine Grundfläche mit einer elektrisch leitend beschichteten Isolierscheibe verschlossen wird. Die Meßelektronik ist gegenüber Befestigungsmitteln und somit gegenüber einem Anbauplatz galvanisch entkoppelt. Zur Befestigung am Anbauplatz ist der Boden des topfförmigen Gehäuses an seiner Außenseite mit einem koaxial angeordneten Gewindezapfen versehen. Der Schallaufnehmer ermöglicht es, den von Strömungsgeräuschen in einem Ventilkörper erzeugten Körperschall in einem Frequenzbereich oberhalb etwa 100 kHz ohne Querempfindlichkeit für elektromagnetische Felder nachzuweisen. Bezüglich weiterer Angaben zum Aufbau des Schallaufnehmers wird auf die obengenannte Gebrauchsmusteranmeldung verwiesen.

In der deutschen Patentanmeldung mit dem amtlichen Aktenzeichen 199 24 377.8 wird ein Diagnosesystem für ein von einem Stellungsregler über einen Antrieb betätigbares Ventil vorgeschlagen, das eine Einrichtung zur Erfassung, Speicherung und Auswertung von an dem Ventil gemessenen Körperschallspektren aufweist. Um eine besonders zuverlässige Ventildiagnose zu ermöglichen, ist in der Einrichtung zur Erfassung, Speicherung und Auswertung ein bei geringfügig geöffnetem, intaktem Ventil erfaßtes Körperschallspektrum abspeicherbar. Zur Diagnose wird ein bei geschlossenem Ventil erfaßtes Körperschallspektrum mit dem abgespeicherten verglichen und die Ähnlichkeit als ein Kriterium für eine Undichtigkeit des Ventils herangezogen.

Der Erfindung liegt die Aufgabe zugrunde, ein Diagnosesystem und ein Diagnoseverfahren zu schaffen, die sich durch eine verbesserte Zuverlässigkeit des Diagnoseergebnisses auszeichnen.

Zur Lösung dieser Aufgabe weist das Diagnosesystem der eingangs genannten Art die im kennzeichnenden Teil des Anspruchs 1 bzw. das Diagnoseverfahren die im kennzeichnenden Teil des Anspruchs 9 angegebenen Merkmale auf. In den Unteransprüchen sind vorteilhafte Weiterbildungen beschrieben.

In vorteilhafter Weise wird gemäß der Erfindung zwischen einem unteren Spektralbereich, in welchem im wesentlichen die Arbeitsgeräusche des Ventils enthalten sind, und einem oberen Spektralbereich, der in bestimmten Betriebszuständen vorwiegend Fehlergeräusche enthält, unterschieden. Die Grenzfrequenz zwischen diesen beiden Spektralbereichen kann zwischen 50 kHz und beispielsweise 200 kHz gewählt werden, da die Arbeitsgeräusche vorwiegend in einem Bereich < 120 kHz auftreten. In jedem Fall wird zur Fehlererkennung ein Spektralbereich des Meßsignals oberhalb einer Frequenz von 50 kHz ausgewertet, der aber nicht unmittelbar bei 50 kHz beginnen muß.

Die Erfindung beruht auf der Erkenntnis, daß die Fehlergeräusche in Gasen überwiegend durch Ultraschallströmung, in Flüssigkeiten überwiegend durch Kavitation entstehen. Ultraschallströmung entsteht schon bei kleinsten Lecks und verursacht an Kanten und Verengungen Verdichtungsstöße und Verdünnungswellen in gasförmigen Medien. Verdichtungsstöße mit spontanen, extrem schnellen Wechseln zwischen lokaler Überschall- und Unterschallströmung im Gas führen zu energiereichen, breitbandigen Ultraschallemissionen, deren Spektralfrequenzen jenen der Kavitation in Flüssigkeiten vergleichbar sind. Als Kavitation wird die Bildung und nachfolgende Kondensation von Dampfblasen in strömenden Flüssigkeiten, hervorgerufen durch Geschwindigkeitsänderungen, bezeichnet. Sie entsteht, wenn bei Beschleunigung der Strömung der Druck örtlich unter den Dampfdruck der Flüssigkeit absinkt, so daß sich Dampfblasen bilden, und wenn es bei anschließender Verzögerung durch den dadurch entstehenden Anstieg des statischen Drucks über den Dampfdruck wieder zur Kondensation der Dampfblasen kommt. Infolge der plötzlichen Volumenverkleinerung führt dies zum schlagartigen Zusammenprall der vorher die Dampfblase umgebenden Flüssigkeitsteilchen mit starken Druckstößen. Diese Druckimpulse erzeugen ein Schallsignal mit einer spektralen Verteilung ähnlich derjenigen eines weißen Rauschens, d. h., bis in hohe Frequenzbereiche sind Signalanteile feststellbar. Eine Verstärkung der Kavitation kann vielfältige Ursachen haben: Beispielsweise abrasiver Verschleiß, Ablagerungen oder Sitzbeschädigungen. Insbesondere bei geschlossenem Ventil ist das Auftreten von Kavitationsrauschen ein deutliches Anzeichen für Leckströmungen eines nicht mehr dicht schließenden Ventils. Die Intensität des Kavitationsrauschens ist dabei abhängig von dem Druck, der an dem Ventil anliegt, und dem Prozeßmedium, welches durch das Ventil fließt.

Die Durchströmung von Leckstellen im Ventil erzeugt Arbeits- und Fehlergeräusche. Die Fehlergeräusche sind vom Aggregatzustand des Mediums, flüssig oder gasförmig, und von der Medienart weitgehend unabhängige, in ihrer Frequenzverteilung einander ähnliche Ultraschallgeräusche. Im Hinblick auf die spektrale Intensitätsverteilung gilt dies besonders für Frequenzbereiche oberhalb 100 kHz. Dagegen sind die Amplituden der Schallspektren von unterschiedlichen niedrigviskosen Flüssigkeiten und Gasen besonders im Frequenzbereich unterhalb von 100 kHz je nach ihren Medieneigenschaften, z. B. den Dampfdrücken der Komponenten, und je nach der lokal im Medium wirksamen Energie der Kavitation bzw. Strömungsänderung wenig bis deutlich voneinander verschieden. Problematisch für Ultraschalldiagnosen sind mittelviskose Stoffe, bei denen der Schallpegel der Ultraschallgeräusche wegen ungünstiger Dampfdrücke gering ist und daher seine höchsten Amplituden nahe am oder im Frequenzbereich der Arbeitsgeräusche analysiert werden müssen. Zudem sind die niederfrequenten Spektralanteile der Fehlergeräusche in realen Prozeßanlagen von Frequenzspektren unterschiedlichster Arbeitsgeräusche überlagert. Bei hochviskosen Flüssigkeiten sind durch deren geringen Dampfdruck Ventilfehler kaum über eine Auswertung der Ultraschallfehlergeräusche analysierbar. Sie sind allerdings bei hohen Drücken oder Erwärmung bis nahe vor den Aggregatzustandswechsel gut analysierbar. Typischerweise sind nur die Arbeitsgeräusche detektierbar. Zur Erkennung kleiner Lecks ist eine zusätzliche Drucksensorik in den An- und Abstromseiten des Ventils geeignet. Obwohl das Entstehen der Ultraschallfehlergeräusche in Ventilen bei flüssigen und gasförmigen Medien auf unterschiedlichen physikalischen Grundlagen beruht, sind diese Geräusche aufgrund ihrer Ähnlichkeiten bezüglich der Frequenzverteilung im oberen Spektralbereich mit denselben Selektions- und Detektionsmitteln und denselben Fehlerkriterien zur Diagnose auswertbar. Zudem sind die Amplitudenverhältnisse aufeinanderfolgender Spektralbänder im Spektralbereich oberhalb 200 kHz in beiden Fällen einander erheblich ähnlicher als im unteren Spektralbereich und so einer gleichartigen Bewertung zugänglich. Störeinflüsse durch eigene oder fremde Arbeitsgeräusche sind wegen deren spektraler Verteilung in hohen Frequenzbereichen erheblich geringer. Zudem werden die relativ kleinen Amplituden der hochfrequenten Spektralanteile in Ultraschallfehlergeräuschen von benachbarten Geräuschquellen durch Übertragungsmedien und apparative Verbindungen gegenüber den niederfrequenten Anteilen intensiver gedämpft.

Ein weiterer Vorteil der Auswertung lediglich höherer Spektralanteile des Schallsignals ist darin zu sehen, daß die Verrohrung, in welche das Ventil in einer prozeßtechnischen Anlage eingebaut ist, bezüglich Schall wie ein Tiefpaß wirkt. Daher erreichen hohe Frequenzanteile eines Kavitationsrauschens in benachbarten Komponenten, beispielsweise in benachbarten Ventilen, nicht den Schallaufnehmer des überwachten Ventils und verfälschen das Meßsignal im hohen Spektralbereich allenfalls geringfügig. Dies führt zu einem besseren Nutz-/Störsignal-Abstand im ausgewerteten Spektralbereich oberhalb 50 kHz gegenüber dem unteren Spektralbereich, in welchem der überwiegende Teil der Arbeitsgeräusche zu finden ist. Eine Filterung bei einer Grenzfrequenz von beispielsweise 500 kHz bewirkt, daß praktisch nurdas durch das überwachte Ventil erzeugte Schallsignal ausgewertet wird.

Besonders vorteilhaft ist ein aktives Hochpaßfilter unmittelbar beim Schallaufnehmer oder vorzugsweise im selben Gehäuse wie der Schallaufnehmer, um bereits im Meßsignal den durch niederfrequente Arbeitsgeräusche hervorgerufenen Anteil zu vermindern. Die Arbeitsgeräusche in einem Spektralbereich unterhalb der Grenzfrequenz 50 kHz wären ohne eine derartige Filterung etwa um den Faktor 1000 stärker als die Schallsignale eines auszuwertenden Spektralbereichs bei etwa 600 kHz. Durch die Filterung wird das aufgenommene Meßsignal von den übermäßig starken niederfrequenten Anteilen des Körperschallsignals befreit. Der Anteil der Arbeitsgeräusche, die in diesem Zusammenhang auch als Störsignale bezeichnet werden können, wird im Meßsignal vermindert und somit ein besseres Nutz-/Störsignal-Verhältnis erreicht. In vorteilhafter Weise kann daher die weitere Signalaufbereitung in der Auswerteeinrichtung mit handelsüblichen Verstärkern oder Filtern durchgeführt und somit aufwandsarm realisiert werden.

Ein Schallwandler mit einem Wandlerelement aus piezoelektrischem Material, das derart ausgebildet ist, daß es im Bereich niederfrequenter Arbeitsgeräusche vergleichsweise unempfindlich, im höherfrequenten Bereich aber empfindlich ist, hat den Vorteil, daß bereits durch das Wandlerelement die Wirkung eines Hochpaßfilters erzielt wird. Auf diese Weise wird ein aktiver Hochpaß des Schallaufnehmers unterstützt oder kann bei ausreichender Hochpaßwirkung des Schallwandlers gegebenenfalls entfallen. Eine Ausfilterung des unteren Spektralbereichs durch den Aufbau des Wandlerelements aus piezoelektrischem Material wird bereits durch geeignete Festlegung seiner Resonanzfrequenz erreicht, die neben den Materialeigenschaften durch die geometrischen Abmessungen Durchmesser und Dicke des Wandlerelements bestimmt wird.

Da für eine Auswertung der Signalanteile in bestimmten Spektralbereichen eine Ausfilterung der Signalanteile in den anderen Spektralbereichen mit einer Dämpfung von mindestens 80 dB bis zu 120 dB gewünscht wird, ist es besonders vorteilhaft, den Schallaufnehmer in einem Gehäuse zur Abschirmung anzuordnen. Auf diese Weise wird ein sehr guter Schutz gegen die Einstreuung elektromagnetischer oder elektrostatischer Felder erreicht, damit die sehr kleinen Nutzsignale im interessierenden Spektralbereich nicht verfälscht werden und gegenüber den großen niederfrequenten Signalanteilen der Arbeitsgeräusche ausreichend in Erscheinung treten.

Zur Impedanzwandlung am Signalabgriff des piezoelektrischen Wandlerelements einsetzbare Transistoren sind in hochtemperaturfesterund dabei rauscharmer Ausführung erhältlich. Damitfür das aktive Hochpaßfilter rauscharme Operationsverstärker verwendbar sind, werden vorteilhaft Mittel zurthermischen Entkopplung des aktiven Hochpaßfilters vom Anbauplatz zwischen Impedanzwandler und aktivem Hochpaßfilter vorgesehen. Diese Mittel können als eine thermische Isolierung durch eine schlecht wärmeleitende Verbindung zwischen den Gehäuseabschnitten, welche das Wandlerelement mit dem Impedanzwandler bzw. das aktive Hochpaßfilter aufnehmen, und eine Kühlvorrichtung, beispielsweise einen Rippenkühlkörper, für das aktive Hochpaßfilter realisiert werden. In vorteilhafter Weise wird durch diese Maßnahme der Einsatzbereich des Diagnosesystems bezüglich der höchsten zulässigen Temperatur des Prozeßmediums erweitert.

Der Boden des Schallwandlergehäuses kann vorteilhaft an seiner Außenseite mit einem Gewindezapfen als Befestigungsmittel versehen werden. Über den Gewindezapfen und die Andruckfläche des Gehäusebodens am Anbauplatz wird eine gute Einkopplung der akustischen Schwingungen zu dem piezoelektrischen Meßelement erreicht. Der Schallwandler kann in einfacher Weise an dem Gehäuse des Ventils oder am Ventilstößel befestigt werden. Eine geschliffene, ebene Kontaktfläche zur Gewährleistung einer guten Schallübertragung sowie eine aufwendige Andrückvorrichtung beispielsweise mit einem Spannband oder einem Magnet, ist nicht erforderlich. Der Schallwandlerermoglicht eine gute Schallkopplung sogar an gekrümmten oder rauhen Oberflächen.

Ein zuschaltbares Hochpaßfilter mit einstellbarer Grenzfrequenz in der Auswerteeinrichtung hat den Vorteil, daß der Einfluß benachbarter Schallquellen je nach Nähe und Filterwirkung der Verrohrung durch Zuschalten dieses Hochpaßfilters und Verändern der Grenzfrequenz angemessen unterdrückt werden kann. Eine ventil- und medienabhängige Einstellung der Grenzfrequenz ist zudem vorteilhaft, um eine gute Unterscheidung zwischen Grund- und Kavitationsrauschen zu ermöglichen. Beispielsweise ist es sinnvoll, die Grenzfrequenz bei einem gasförmigen Medium niedriger als bei einem flüssigen Medium einzustellen, um näherungsweise dieselbe Empfindlichkeit für die Unterscheidung zwischen Grund- und Kavitationsrauschen zu erreichen.

Zusätzlich kann in der Auswerteeinrichtung ein zuschaltbares Bandpaßfilter mit einstellbarer oberer und unterer Grenzfrequenz vorgesehen werden. Ein derartiges Bandpaßfilter erlaubt in vorteilhafter Weise ein Scannen über verschiedene Spektralbereiche des Meßsignals. Damit ist ein Vergleich der Signalintensität in einem Spektralbereich mit derjenigen in einem anderen Spektralbereich möglich.

Bei Verwendung des zuschaltbaren Bandpaßfilters kann nach dem folgenden Verfahren der Einfluß des Grundrauschens im Meßsignal auf das Meßergebnis vermindert werden. Die Stärke des Grundrauschens im Meßsignal wird bestimmt, indem die Signalstärke in einem Spektralbereich oberhalb einer zweiten Grenzfrequenz, beispielsweise 1 MHz, gemessen wird, die oberhalb einer ersten Grenzfrequenz, z. B. 500 kHz, liegt und so gewählt ist, daß der Meßwert durch Kavitationsgeräusche nur wenig beeinflußt wird. Durch Messen der Signalstärke in einem Spektralbereich zwischen der ersten und der zweiten Grenzfrequenz wird anschließend die Stärke des Kavitationsrauschens gemessen, dem auch das Grundrauschen als Störsignal überlagert ist. Anhand der anfangs bestimmten Stärke des Grundrauschens wird ein Schwellwert festgelegt. Wenn die Stärke des Kavitationsrauschens den Schwellwert übersteigt, wird ein Fehlermeldesignal durch die Auswerteeinrichtung erzeugt. Damit ist das Meßergebnis weitgehend unabhängig vom Grundrauschen, das je nach Medium und Umgebung des Ventils in der prozeßtechnischen Anlage sowie je nach den Eigenschaften des Ventils selbst stark variiert.

Eine in vorteilhafter Weise weiter an die spezifischen Gegebenheiten angepaßte Diagnose kann erreicht werden, indem zur Ermittlung des Schwellwerts das Verhältnis der Stärke des Kavitationsrauschens zur Stärke des Grundrauschens im Neuzustand des Ventils bestimmt und abgespeichert wird und indem der Schwellwert höher als die mit diesem Verhältniswert multiplizierte Stärke des zur Diagnose gemessenen Grundrauschens gewählt wird.

In vorteilhafter Weise kann zudem anhand zeitlich aufeinanderfolgender Diagnosemessungen eine Trendaussage abgeleitet werden, wann eine Überschreitung des Schwellwerts zu erwarten ist. Damit wird eine Früherkennung und Bewertung sich schleichend entwickelnder Fehler ermöglicht, mit welcher Geräte- und Produktfehler vermieden werden können, die ansonsten zu überraschenden Anlagenstillständen mit hohen Folgekosten führen könnten. Durch eine darauf basierende Koordinierung des individuellen Wartungsbedarfs der einzelnen Anlagenkomponenten können die für eine Wartung der Ventile erforderlichen Stillstandszeiten der Anlage minimiert werden. Arbeits- und Fehlergeräusche werden zur Diagnose bei bestimmten Betriebszuständen gemessen und für die Trendermittlung mit zeitlich früher gemessenen, gleichartigen Werten verglichen. Dabei dient die Ermittlung der Arbeitsgeräusche einer zusätzlichen Bestimmung der Fehlerart. In Verbindung mit bestimmten Arbeitsfrequenzen lassen zunehmend hohe Signalpegel bestimmter höherer Fehlerfrequenzbänder und ihre langsame Verschiebung zu niedrigeren Frequenzen auf abrasiven Verschleiß der Ventile schließen. Auf Ablagerungen deuten andere Frequenzkorrelationen im mittleren Fehlerfrequenzbereich und zunehmende Arbeitsgeräusche hin. Beschädigungen des Ventilsitzes zeigen eher sprunghafte Frequenzänderungen des Fehlersignals bei verschiedenen Stellungen des Ventils mit wenig geöffnetem Durchlaß, ohne daß sich dabei die Arbeitsgeräusche deutlich verändern. Als Ergebnis der Diagnose können mit der Auswerteeinrichtung entweder eine "Gut"-Zustandsmelduhg, eine Fehlervorwarnung oder eine Fehlermeldung erzeugt und ausgegeben werden. Soweit aus dem Meßsignal eine Fehlerart abgeleitet werden kann, wird das Fehlermeldesignal mit einer Kennzeichnung der Fehlerartversehen. Mit der Kenntnis der Fehlerart können geeignete Wartungsmaßnahmen des Ventils eingeleitet werden.

Die Erfindung ermöglicht eine für den Betreiber vorteilige, permanent oder wahlweise nur in bestimmten Betriebszuständen oder Zeitabständen aktivierbare Ventildiagnose, die ohne Abschaltung der Anlage möglich und in die Prozeßgeräte sowie in den Prozeßablauf integrierbar ist. Das Diagnosesystem ist aufgrund der Eigenschaften des Schallaufnehmers und der Auswerteeinrichtung so einfach zu handhaben, daß es an beliebigen Regelventilen oder anderen Maschinenteilen, beispielsweise Durchflußmessern oder Schiebern, ohne Betriebsunterbrechung nachgerüstet werden kann.

Anhand der Zeichnungen, in denen ein Ausführungsbeispiel der Erfindung dargestellt ist, werden im folgenden die Erfindung sowie Ausgestaltungen und Vorteile näher erläutert.

Es zeigen:
- Figur 1: einen prinzipiellen Aufbau eines Regelventils mit einem Diagnosesystem,
- Figur 2: ein Blockschaltbild eines Diagnosesystems,
- Figur 3: ein Frequenzdiagramm eines typischen
- Figur 4: Meßsignals mit Kavitationsrauschen und eine Prinzipdarstellung eines Schallwandlers.

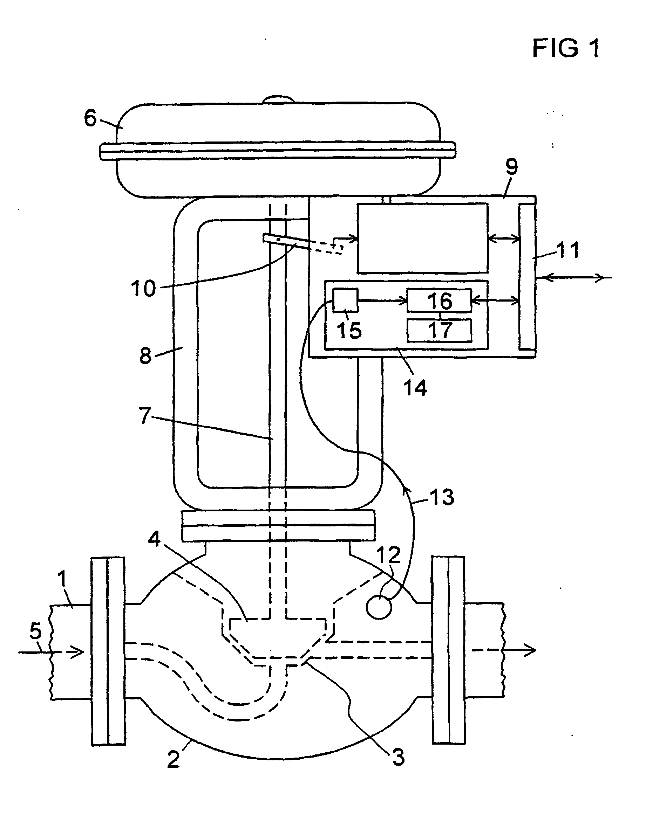

In eine Rohrleitung 1 einer nicht weiter dargestellten prozeßtechnischen Anlage ist gemäß Figur 1 ein Ventil 2 eingebaut, das durch einen entsprechenden Hub eines mit einem Ventilsitz 3 zusammenwirkenden Schließkörpers 4 den Durchfluß eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden. An dem Joch 8 ist ein Stellungsregler 9 angebracht, der eingangsseitig über ein an der Ventilstange 7 angreifendes Verbindungsstück 10 den Hub erfaßt, diesen mit einem über eine Datenschnittstelle 11 von einem Feldbus zugeführten Sollwert vergleicht und ausgangsseitig den pneumatischen Antrieb 6 im Sinne einer Ausregelung der Regeldifferenz steuert. An dem Gehäuse des Ventils 2 ist ein Schallaufnehmer 12 angebracht, dessen Signal 13 als Meßsignal einer Einrichtung 14 zur Erfassung, Speicherung und Auswertung von Körperschallspektren zugeführt wird. Diese Einrichtung 14 ist bei dem gezeigten Ausführungsbeispiel Bestandteil des Stellungsreglers 9, kann aber alternativ von diesem getrennt ausgebildet sein. Die Einrichtung 14 enthält eine Signalaufbereitungsschaltung 15, in der das Meßsignal 13 des Schallaufnehmers 12 verstärkt, gefiltert und digitalisiert wird. In einer nachgeordneten Recheneinheit 16 wird aus dem aufbereiteten Signal 13 beispielsweise durch eine Fast-Fourier-Transformation das Frequenzspektrum ermittelt. Dieses kann je nach Anforderung in einem Speicher 17 abgespeichert oder weiter ausgewertet werden, um eine Information über den Zustand des Ventils 2 zu erhalten. Die Erfassung, Speicherung und Auswertung der Körperschallspektren wird periodisch ausgeführt oder über die Datenschhittstelle 11 veranlaßt, über die auch das Ergebnis der Auswertung der Körperschallspektren abfragbar ist.

Alternativ zu dem gezeigten Ausführungsbeispiel können einzelne Funktionen der Auswertung aus der Einrichtung 14 in einen an den Feldbus angeschlossenen Personal Computer ausgelagert und ein digitalisiertes Meßsignal oder Eigenschaften des Meßsignals beschreibende Daten an diesen über die Datenschnittstelle 11 übertragen werden. Eine derartige Aufteilung bietet wegen gemeinsamer Nutzung der Parametersteuerung für die Signalaufbereitungsschaltung 15 und der Auswertung des aufbereiteten Meßsignals ein besonders günstiges Preis-Leistungs-Verhältnis. Mit den Möglichkeiten eines Personal Computers ist in einfacher Weise eine optimierende Neuroanalyse-Software zur Ventilfehlerstatistik und Fehlertrendermittlung anwendbar. Zudem ist eine "lernende" Parametrierung der Signalaufbereitungsschaltung 15 zur Anpassung an verschiedene Gegebenheiten am Einbauplatz des Ventils und an verschiedene Ventiltypen und damit eine Selbstoptimierung des Diagnosesystems möglich. Ein derartiges Diagnosesystem ist für eine größere Anzahl zu überwachender Komponenten vergleichsweise aufwandsarm realisierbar, weil die dezentral anzuordnenden Schaltungsteile des Systems auf das notwendige Maß reduziert und vereinfacht werden.

Der Schallaufnehmer 12 kann alternativ zur dargestellten Anbringung an der Außenwand des Gehäuses beispielsweise am Joch 8, an einem Verbindungsflansch zwischen Joch 8 und Gehäuse, an den Flanschen zwischen Gehäuse und Rohrleitung 1 oder an der Ventilstange 7 befestigt werden. Eine Anbringung des Schallaufnehmers an der Ventilstange 7 hat dabei den Vorteil, daß gerade die hochfrequenten Signalanteile des Körperschalls benachbarter Komponenten in der prozeßtechnischen Anlage, welche über die Rohrleitung 1 gedämpft zum überwachten Ventil gelangen, durch die üblicherweise in Ventilen verwendete Stopfbuchse an der Gehäusedurchführung der Ventilstange 7 eine zusätzliche Dämpfung erfahren. Andererseits wird der Körperschall des überwachten Ventils über den Schließkörper 4 vorteilhaft unmittelbar auf die Ventilstange 7 übertragen.

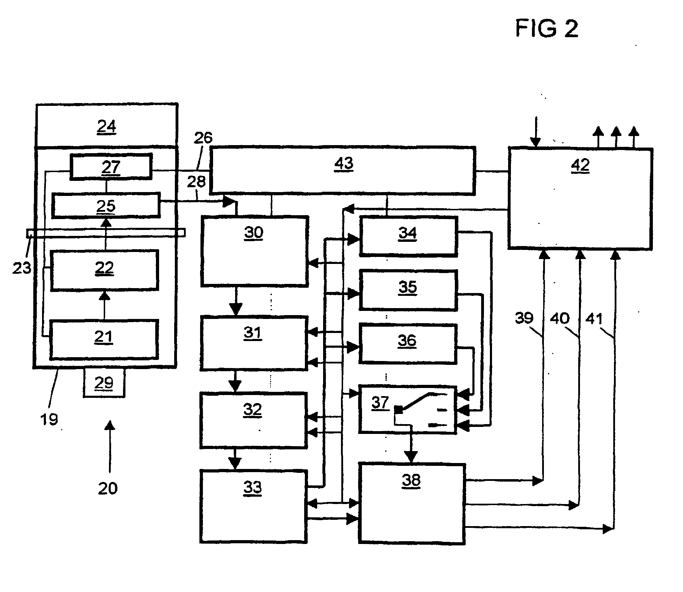

Gemäß Figur 2 erfolgt die Erfassung des Körperschalls durch einen Schallaufnehmer 20, dessen elektronische Komponenten durch ein Gehäuse 19 vor elektromagnetischer und elektrostatischer Einstrahlung geschützt sind. Nahe bei einer Bodenplatte des Gehäuses, mit welcher der Schallaufnehmer durch Eindrehen eines Gewindezapfens 29 in eine dazu korrespondierende Gewindebohrung an einen Anbauplatz angedrückt wird, ist ein Wandlerelement 21, das aus piezoelektrischem Keramikmaterial besteht, angeordnet. Zwischen dem Wandlerelement 21 und der Bodenplatte kann zur Filterung des Körperschalls eine Isolierkeramik mit einer durch mikromechanische Fertigungsmethoden erzeugten Struktur vorgesehen werden, die als Hochpaßfilter wirkt. Dem Wandlerelement 21 ist ein Impedanzwandler 22 nachgeschaltet, der neben passiven Bauelementen lediglich hochtemperaturfeste, rauscharme Transistoren enthält. Die Komponenten Wandlerelement 21 und Impedanzwandler 22 sind der Temperatur am Anbauplatz ausgesetzt. Weitere Teile des Schallaufnehmers 20 werden durch eine thermische Isolierung 23 und einen Kühler 24 vom Anbauplatz thermisch entkoppelt, damit für den Aufbau eines aktiven Hochpaßfilters 25 auch rauscharme, aber weniger hochtemperaturfeste Operationsverstärker einsetzbar sind. Zur Vermeidung elektromagnetischer Einkopplungen ist am Eingang für eine Versorgungsleitung 26 ein Filter 27 vorgesehen. Ein von dem aktiven Hochpaßfilter 25 ausgegebenes Meßsignal wurde im Schallaufnehmer 20 bereits derart gefiltert, daß die in ihrer Intensität um das Tausendfache gegenüber dem Kavitationsrauschen stärkeren Signalanteile der Arbeitsgeräusche des Körperschalls erheblich vermindert sind und eine Auswertung des Kavitationsrauschens mit einem Meßsignal 28 erheblich erleichtert wird.

In der Auswerteeinrichtung sind weitere Mittel zur Signalverarbeitung vorgesehen. Eine Einrichtung zur Signalaufbereitung besteht aus einem Verstärker 30 mit beispielsweise 5 MHz Bandbreite und einstellbarer oder geregelter Ausgangsspannung, einem wahlweise zuschaltbaren Hochpaßfilter 31 mit einstellbarer Grenzfrequenz, einem ebenfalls wahlweise zuschaltbaren Bandpaßfilter 32 mit einstellbarer oberer und unterer Grenzfrequenz sowie einem Verstärker 33, der mit einem Tiefpaßfilter mit umschaltbarer Grenzfrequenz kombiniert ist. Das Ausgangssignal des Verstärkers 33 ist zur Auswertung der Intensität des aufbereiteten Meßsignals auf einen Spitzenwertdetektor 34, einen Mittelwertbildner 35 sowie einen Effektivwertbildner 36 geführt. Durch einen Multiplexer 37 kann eines der Ausgangssignale der Bausteine 34, 35 oder 36 zur Bewertung der Intensität des aufbereiteten Meßsignals ausgewählt werden. In einem Schwellendiskriminator 38 wird ein Fehlermeldesignal erzeugt, wenn die Intensität des aufbereiteten Meßsignals einen bestimmten Schwellwert übersteigt. Eine Meldung "Ventilfehler" wird auf einer Leitung 39, eine Meldung "Fehlertrend" auf einer Leitung 40 und eine Meldung "Ventil gut" auf einer Leitung 41 an eine Ablaufsteuerung 42 mit Zustandsspeicher ausgegeben. Die Ablaufsteuerung 42 gibt diese Fehlermeldungen über eine Datenschnittstelle weiter und erhält von dieser über einen Triggereingang eine Aufforderung zur Durchführung einer Diagnose. Für alle elektronischen Komponenten des Diagnosesystems gemeinsam ist eine Spannungsversorgung und -überwachung 43 vorgesehen.

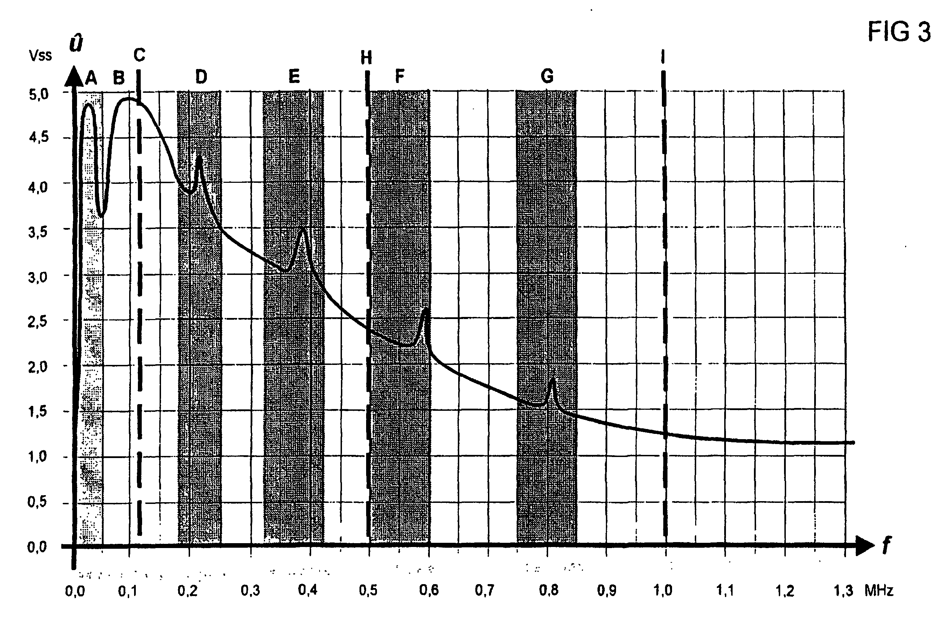

An dem Verlauf eines typischen Frequenzspektrums gemäß Figur 3 ist deutlich zu sehen, daß Arbeitsgeräusche im Meßsignal trotz der starken Hochpaßfilterung im Schallaufnehmer noch vergleichsweise stark vorhanden sind. Die Frequenzen mit maximaler Spitzenspannung VSS der Arbeitsgeräusche sind am oberen Rand des Diagramms mit A und B markiert. Durch entsprechende Einstellung der Grenzfrequenzen des Bandpaßfilters (32 in Figur 2) können die Signalanteile in Frequenzbereichen D, E, F und G, die überwiegend durch Kavitationsrauschen verursacht sind, detektiert werden. Mit senkrechten Linien bei Frequenzen C, H und I sind mögliche Grenzfrequenzen markiert, die zur Auswertung der Signalanteile in den jeweiligen Frequenzspektren beispielsweise im Hochpaßfilter (31 in Figur 2) oder im Bandpaßfilter (32 in Figur 2) eingestellt werden können.

Die Trennung des Geräuschspektrums geschieht durch automatisch über die verschiedenen Spektralbereiche scannende, ventil- und prozeßadaptive Filterung mit über den Feldbus ladbaren Parameterbasisdaten. Dieses Scannen der Spektralbereiche kann bei einem bekannten Ventiltyp und bekannten Prozeßrahmenbedingungen mit vorbestimmten Grenzfrequenzen stattfinden oder muß nur ein zur Fehlererkennung charakteristisches Frequenzband erfassen.

Nach der Signalaufbereitung folgt eine weitere Verarbeitung der nach Spektralbereichen selektierten Signalanteile. Sie werden nach ihren Spitzenwerten, gleitenden Durchschnittswerten oder gleitenden effektiven Energieinhalten untersucht. Die Ergebnisse werden für statistische Zwecke und die weitere Auswertung gespeichert, beispielsweise zur Berechnung der gleitenden Vergleichswerte aus zeitlich kurz zurückliegenden Messungen oderzur Berechnung von Vergleichswerten aus fernerer Vergangenheit. Zur Bewertung des Ventilzustands werden die selektierten Signalanteile bezüglich ihrer Intensität mit den Vergleichswerten als Fehlergrenzen verglichen, die Ergebnisse gespeichert und entsprechende Fehlermeldesignale erzeugt.

Wenn der Aufwand es erlaubt, sollte das Meßsignal bereits unmittelbar am Eingang der Auswerteeinrichtung digitalisiert werden, damit die weiteren Auswertungen beispielsweise mit Signalprozessoren digital erfolgen können. Prinzipiell kann die Auswahl der Signalanteile nach Spektralbereichen, die Ermittlung der Signalpegel und der Energie sowie die einfache Analytik zur Schwellenermittlung, Fehlerbewertung und Trendbestimmung sowohl analog erfolgen als auch mit Digitalprozessoren. Eine darüber hinausgehende erweiterte Analytik erfordert jedoch größere Rechenkapazität in einem digitalen Signalprozessor oder in einem externen, organisatorisch überlagerten Gerät, z. B. einem Personal Computer.

Durch den Einsatz der Fuzzy-Technik und selbstlernender, adaptiver Diagnosestrategien auf der Basis neuronaler Strukturen läßt sich ein vollautomatischer Ablauf der Diagnose erreichen. Insbesondere für eine weitestgehend automatische Fehlerermittlung an einer größeren Anzahl zu überwachender Komponenten ist eine neuronale Auswertung in einer zentralen, über einen Feldbus angekoppelten Recheneinheit, z. B. einem Personal Computer, kostengünstig. Die für die Diagnose benötigten Teile an den zu untersuchenden Ventilen können über den Feldbus ferngesteuert eingestellt und die Meßsignale zentral ausgewertet werden. Der Aufwand für die dezentral beim Ventil anzuordnenden Teile ist in diesem Fall auf den Schallaufnehmer und die über den Feldbus ferngesteuerten Schaltungsteile Filterverstärker sowie Signalprozessor mit Analog-/Digital-Umsetzer und Kommunikationsschnittstelle begrenzt. Der Filterverstärker kann zusätzlich in den Schallaufnehmer integriert werden oder gemeinsam mit dem ferngesteuerten Signalprozessor und dem Analog-/Digital-Umsetzer eine optionale Zusatzeinheit eines Stellungsreglers für ein Regelventil bilden.

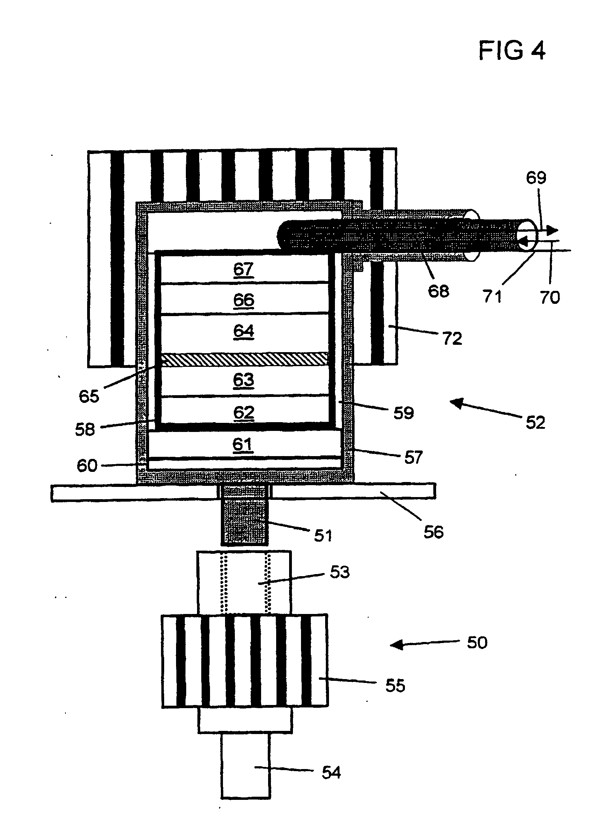

Für eine Fehlergeräuschanalyse an extrem heißen Anlagenteilen ist der Einsatz eines stabförmigen Schallwellenleiters 50 gemäß Figur 4 möglich. Er besteht vorzugsweise aus Edelstahl und ist zum Eindrehen eines Gewindezapfens 51 eines Schallaufnehmers 52 mit einer Gewindebohrung 53 versehen. An einem gegenüberliegenden Ende weist er einen Gewindezapfen 54 auf, mit welchem er in eine dazu korrespondierende Gewindebohrung an einem Anbauplatz eingedreht werden kann. Auf den Schallwellenleiter 50 ist ein Rippenkühlkörper 55 aufgepreßt. Zwischen Schallwellenleiter 50 und Schallaufnehmer 52 kann eine Abschirmscheibe 56 eingelegt werden, welche den Schallaufnehmer 52 gegenüber der vom Anbauplatz ausgehenden Wärmestrahlung abschirmt. Mit dem Schallwellenleiter 55 kann je nach Bedarf der Abstand des Schallaufnehmers 52 zum Anbauplatz an einer heißen Anlagenkomponente vergrößert werden. Er ist ähnlich einem Verlängerungsstück einsetzbar, an dessen einem Ende der Gewindezapfen 51 eingedreht und dessen anderes Ende mit dem Gewindezapfen 54 in die Gewindebohrung am Anbauplatz eingeschraubt werden kann. Der Gewindezapfen 54 dient sowohl zur Befestigung am Anbauplatz als auch zur Geräuscheinkopplung in den Schallwellenleiter 55 und somit in den Schallaufnehmer 52. Mit dem Schal lwellen leiter 50 wird eine gute thermische Entkopplung zwischen einem heißen Anbauplatz und dem Schallaufnehmer 52 erreicht.

Der Schallaufnehmer 52 besitzt eine äußere elektromagnetische Abschirmung 57 und eine innere elektromagnetische Abschirmung 58, die gegeneinander durch eine Hülse 59 elektrisch isoliert sind. Auf der Bodenfläche der äußeren elektromagnetischen Abschirmung 57 liegt eine Isolierscheibe 60 aus keramischem Material. Darüber befindet sich ein mikromechanisches Filter 61. Auf der Innenseite der Bodenfläche der elektromagnetischen Abschirmung 58 ist ein piezoelektrisches Element 62, das ebenfalls aus keramischem Material besteht, angeordnet. Darüber befindet sich ein weiteres mikromechanisches Filter 63. Zwischen dem mikromechanischen Filter 63 und einem Impedanzwandler 64 bildet eine Isolierschicht 65 eine thermische Entkopplung. Dem Impedanzwandler 64 ist ein aktives Filter 66 nachgeschaltet, an welches mit Anschlußmitteln 67 ein Kabel 68 zum Abgriff eines Sensorsignals 69 und zur Einspeisung einer Versorgung 70 mit einer Schirmleitung 71 angeschlossen ist. Auf die äußere Abschirmung 57 ist ein Kühlkörper 72 mit Längsrippen aufgepreßt. Je nach Einbaulage des Schallaufnehmers kann es zweckmäßig sein, alternativ einen Kühlkörper mit Querrippen zu verwenden.

## Patentansprüche

1. Diagnosesystem, insbesondere für ein von einem Stellungsregler (9) über einen Antrieb (6) betätigbares Ventil (2), mit einem Aufnehmer (12) für Körperschall und mit einer Einrichtung (14) zur Auswertung des aufgenommenen Meßsignals (13), wobei die Auswerteeinrichtung (14) derart ausgebildet ist,
- daß zur Fehlererkennung ein Spektralbereich des Meßsignals (13) oberhalb einer ersten Grenzfrequenz (C) ausgewertet wird, die größer als 50 kHz ist,
- daß ein Fehlermeldesignal erzeugt wird, wenn die Intensität des Meßsignals (13) in diesem Spektralbereich einen bestimmten Schwellwert übersteigt,
- daß die Stärke des Grundrauschens im Meßsignal (13) durch Messen der Signalstärke in einem Spektralbereich oberhalb einer dritten Grenzfrequenz (I) bestimmt wird, die oberhalb einer zweiten Grenzfrequenz (H) liegt und so gewählt ist, daß der Meßwert durch Kavitationsgeräusche nur wenig beeinflußt wird,
- daß die Stärke des Kavitationsrauschens im Meßsignal durch Messen der Signalstärke in einem Spektralbereich zwischen der zweiten Grenzfrequenz (H) und der dritten Grenzfrequenz (I) bestimmt wird,
- daß der Schwellwert anhand der Stärke des Grundrauschens ermittelt wird und
- daß das Fehlermeldesignal erzeugt wird, wenn die Stärke des Kavitationsrauschens den Schwellwert übersteigt.

2. Diagnosesystem nach Anspruch 1, **dadurch gekennzeichnet,**
- **daß** der Schallaufnehmer (20) mit einem aktiven Hochpaßfilter (25) versehen ist, um im Meßsignal (28) den durch niederfrequente Arbeitsgeräusche hervorgerufenen Anteil zu vermindern.

3. Diagnosesystem nach Anspruch 1 oder 2, **dadurch gekennzeichnet,**
- **daß** der Schallaufnehmer (20) ein Wandlerelement (21), insbesondere aus piezoelektrischem Material, enthält, das derart ausgebildet ist, daß es im Bereich niederfrequenter Arbeitsgeräusche vergleichsweise unempfindlich, im höherfrequenten Bereich aber empfindlich ist.

4. Diagnosesystem nach einem der vorhergehenden Ansprüche, **dadurch gekennzeichnet,**
- **daß** der Schallaufnehmer (20) ein Gehäuse (19) zur Abschirmung gegen elektromagnetische und elektrostatische Felder aufweist.

5. Diagnosesystem nach einem der Ansprüche 2 bis 4, **dadurch gekennzeichnet,**
- **daß** der Schallaufnehmer (20) Mittel (23, 24) zur thermischen Entkopplung des aktiven Hochpaßfilters (25) vom Anbauplatz aufweist.

6. Diagnosesystem nach einem der vorhergehenden Ansprüche, **dadurch gekennzeichnet,**
- **daß** der Schallaufnehmer (20) mit einem Gewindezapfen (29) als Befestigungsmittel versehen ist.

7. Diagnosesystem nach einem der vorhergehenden Ansprüche, **dadurch gekennzeichnet,**
- **daß** die Auswerteeinrichtung ein zuschaltbares Hochpaßfilter (31) mit einstellbarer Grenzfrequenz aufweist.

8. Diagnosesystem nach einem der vorhergehenden Ansprüche, **dadurch gekennzeichnet,**
- **daß** die Auswerteeinrichtung ein zuschaltbares Bandpaßfilter (32) mit einstellbarer oberer und unterer Grenzfrequenz aufweist.

9. Diagnoseverfahren, insbesondere für ein von einem Stellungsregler (9) über einen Antrieb (6) betätigbares Ventil (2), mit einem Schallaufnehmer (20) für Körperschall und mit einer Einrichtung (14) zur Auswertung des aufgenommenen Meßsignals (13),
wobei zur Fehlererkennung ein Spektralbereich des Meßsignals (13) oberhalb einer ersten Grenzfrequenz (C) ausgewertet wird, die größer als 50 kHz ist, und
wobei ein Fehlermeldesignal erzeugt wird, wenn die Intensität des Meßsignals (13) in diesem Spektralbereich einen bestimmten Schwellwert übersteigt,
mit den folgenden Schritten:
- Bestimmen der Stärke des Grundrauschens im Meßsignal (13) durch Messen der Signalstärke in einem Spektralbereich oberhalb einer dritten Grenzfrequenz (I), die oberhalb einer zweiten Grenzfrequenz (H) liegt und so gewählt ist, daß der Meßwert durch Kavitationsgeräusche nur wenig beeinflußt wird,
- Bestimmen der Stärke des Kavitationsrauschens im Meßsignal durch Messen der Signalstärke in einem Spektralbereich zwischen der zweiten Grenzfrequenz (H) und der dritten Grenzfrequenz (I),
- Ermitteln des Schwellwerts anhand der Stärke des Grundrauschens und Erzeugen des Fehlermeldesignals, wenn die Stärke des Kavitationsrauschens den Schwellwert übersteigt.

10. Diagnoseverfahren nach Anspruch 9, **dadurch gekennzeichnet,**
- **daß** zur Ermittlung des Schwellwerts das Verhältnis der Stärke des Kavitationsrauschens zur Stärke des Grundrauschens im fehlerfreien Zustand, insbesondere im Neuzustand, des Ventils (2) bestimmt wird und
- **daß** der Schwellwert höher als die mit diesem Verhältniswert multiplizierte Stärke des zur Diagnose gemessenen Grundrausehens gewählt wird.

11. Diagnoseverfahren nach Anspruch 10, **dadurch gekennzeichnet,**
- **daß** anhand zeitlich aufeinanderfolgender Diagnosemessungen eine Trendaussage abgeleitet wird, wann eine Überschreitung des Schwellwerts zu erwarten ist.

## Revendications

1. Système de diagnostic, notamment pour une soupape (2) pouvant être actionnée par un mécanisme régleur de position (9) par l'intermédiaire d'un entraînement (6), comportant un capteur (12) pour bruit de structure et un dispositif (14) d'évaluation du signal mesuré capté (13), le dispositif (14) d'évaluation étant tel que
- un domaine spectral du signal mesuré (13) au-dessus d'une première fréquence limite (C) qui est supérieure à 50 kHz est exploité pour la détection de défaut, et
- un signal d'avertissement de défaut est produit lorsque l'intensité du signal mesuré (13) dans ce domaine spectral dépasse une certaine valeur de seuil,
- L'intensité du bruit de fond dans le signal mesuré (13) est déterminée par mesure de l'intensité de signal dans un domaine spectral au-dessus d'une troisième fréquence limite (I) qui est supérieure à une deuxième fréquence limite (H) et qui est choisie de telle sorte que la valeur mesurée n'est que peu influencée par des bruits de cavitation,
- L'intensité du bruit de cavitation dans le signal mesuré est déterminée par mesure de l'intensité de signal dans le domaine spectral entre la deuxième fréquence limite (H) et la troisième fréquence limite (I),
- la valeur de seuil est déterminée au moyen de l'intensité du bruit de fond et
- Le signal d'avertissement de défaut est produit lorsque l'intensité de bruit de cavitation dépasse la valeur de seuil.

2. Système de diagnostic selon la revendication 1, **caractérisé par le fait que**
- le capteur acoustique (20) est muni d'un filtre passe-haut actif (25) pour réduire dans le signal mesuré (28) la composante due à des bruits de travail à basse fréquence.

3. Système de diagnostic selon la revendication 1 ou 2, **caractérisé par le fait que**
- le capteur acoustique (20) contient un élément transformateur (21), notamment en un matériau piézoélectrique, qui est conçu de telle sorte qu'il est relativement insensible dans le domaine des bruits de travail à basse fréquence mais sensible dans le domaine à haute fréquence.

4. Système de diagnostic selon l'une des revendications précédentes, **caractérisé par le fait que**
- le capteur acoustique (20) comporte un boîtier (19) pour le blindage contre des champs électromagnétiques et électrostatiques.

5. Système de diagnostic selon l'une des revendications 2 à 4, **caractérisé par le fait que**
- le capteur acoustique (20) comporte des moyens (23, 24) pour le découplage thermique du filtre passe-haut actif (25) par rapport à l'emplacement de montage.

6. Système de diagnostic selon l'une des revendications précédentes, **caractérisé par le fait que**
- le capteur acoustique (20) est muni d'une goupille filetée (29) comme moyen de fixation.

7. Système de diagnostic selon l'une des revendications précédentes, **caractérisé par le fait que**
- le dispositif d'évaluation comporte un filtre passe-haut (31) pouvant être branché en plus et ayant une fréquence limite réglable.

8. Système de diagnostic selon l'une des revendications précédentes, **caractérisé par le fait que**
- le dispositif d'évaluation comporte un filtre passe-bande (32) pouvant être branché en plus et ayant des fréquences limites supérieure et inférieure réglables.

9. Procédé de diagnostic, notamment pour une soupape (2) pouvant être actionnée par un mécanisme régleur de position (9) par l'intermédiaire d'un entraînement (6), comportant un capteur acoustique (20) pour bruit de structure et un dispositif (14) d'évaluation du signal mesuré capté (13), **caractérisé par le fait que**
- on exploite pour la détection de défaut un domaine spectral du signal mesuré (13) au-dessus d'une première fréquence limite (C) qui est supérieure à 50 kHz, et
- on produit un signal d'avertissement de défaut lorsque l'intensité du signal mesuré (13) dans ce domaine spectral dépasse une certaine valeur de seuil,
comprenant les étapes suivantes :
- détermination de l'intensité du bruit de fond dans le signal mesuré (13) par mesure de l'intensité de signal dans un domaine spectral au-dessus d'une troisième fréquence limite (I) qui est supérieure à une deuxième fréquence limite (H) et qui est choisie de telle sorte que la valeur mesurée n'est que peu influencée par des bruits de cavitation,
- détermination de l'intensité du bruit de cavitation dans le signal mesuré par mesure de l'intensité de signal dans un domaine spectral entre la deuxième fréquence limite (H) et la troisième fréquence limite (I),
- détermination de la valeur de seuil à l'aide de l'intensité du bruit de fond et production du signal d'avertissement de défaut lorsque l'intensité du bruit de cavitation dépasse la valeur de seuil.

10. Procédé de diagnostic selon la revendication 9, **caractérisé par le fait que**
- pour la détermination de la valeur de seuil, on détermine le rapport de l'intensité du bruit de cavitation à l'intensité du bruit de fond pour un état de fonctionnement sans défaut, notamment pour l'état neuf, de la soupape (2) et
- on choisit la valeur de seuil plus grande que l'intensité, multipliée par cette valeur de rapport, du bruit de fond mesuré pour le diagnostic.

11. Procédé de diagnostic selon la revendication 10, **caractérisé par le fait que**
- on déduit à l'aide de mesures de diagnostic successives une indication de tendance qui indique quand il faut s'attendre à un dépassement de la valeur de seuil.

## Claims

1. Diagnostic system, especially for a valve (2) able to be actuated by a position controller (9) via a drive (6), with a sensor (12) for solid-borne sound and with a device (14) for evaluation of the measurement signal recorded (13), with the evaluation device (14) being embodied such that,
- for error detection a spectral range of the measurement signal (13) above a first limit frequency (C) is evaluated which is greater than 50 kHz,
- an error notification signal is created if the intensity of the measurement signal (13) in this spectral range exceeds a specific threshold value,
- the strength of the background noise in the measurement signal (13) is determined by measuring the signal strength in a spectral range above a third limit frequency (I) which lies above a second limit frequency (H) and is selected so that the measured value is only slightly influenced by cavitation noises,*
- the strength of the cavitation noise in the measurement signal is determined by measuring the signal strength in a spectral area between the second limit frequency (H) and the third limit frequency (I),
- the threshold value is determined on the basis of the strength of the background noise and
- The error notification signal is generated if the strength of the cavitation noise exceeds the threshold value.

2. Diagnostic system in accordance with claim 1, **characterized in that**,
- the solid-borne sound sensor (20) is provided with an active highpass filter (25) in order to reduce the component in the measurement signal (28) caused by low-frequency operating noises.

3. Diagnostic system in accordance with claim 1 or 2,
**characterized in that**,
- the solid-borne sound sensor (20) contains a converter element (21), especially made of piezoelectric material which is embodied such that it is comparatively insensitive in the low-frequency operating noise range but sensitive in the high-frequency range.

4. Diagnostic system in accordance with one of the previous claims, **characterized in that**,
- the solid-borne sound sensor (20) has a housing (19) to shield it from electromagnetic and electrostatic fields.

5. Diagnostic system in accordance with one of the claims 2 to 4, **characterized in that**,
- the solid-borne sound sensor (20) has means (23, 24) for thermal decoupling of the active highpass filter (25) from its mounting location.

6. Diagnostic system in accordance with one of the previous claims, **characterized in that**,
- the solid-borne sound sensor (20) is provided with a threaded rod (29) as its means of attachment.

7. Diagnostic system in accordance with one of the previous claims, **characterized in that**,
- the evaluation device features a connectable highpass filter (31) with adjustable limit frequency.

8. Diagnostic system in accordance with one of the previous claims, **characterized in that**,
- the evaluation device has a connectable bandpass filter (32) with adjustable upper and lower limit frequency.

9. Diagnostic method, especially for a valve(2) which can be actuated by a position controller (9) via a drive (6), with a solid-borne sound sensor (20) for solid-borne sound and with a device (14) for evaluation of the measurement signal recorded (13),
with, for error detection, a spectral range of the measurement signal (13) above a first limit frequency (C) being evaluated which is greater than 50 kHz, and
with an error notification signal being created if the intensity of the measurement signal (13) in this spectral range exceeds a specific threshold value,
with the following steps:
- Determining the strength of the background noise in the measurement signal (13) by measuring the signal strength in a spectral range above a third limit frequency (I), which lies above a second limit frequency (H) and is selected so that the measured value is only slightly affected by cavitation noises,
- Determining the strength of the cavitation noise in the measurement signal by measuring the signal strength in a spectral area between the second limit frequency (H) and the third limit frequency (I),
- Determining the threshold value on the basis of the strength of the background noise and generating the error notification signal if the strength of the cavitation noise exceeds the threshold value.

10. Diagnostic method in accordance with claim 9, **characterized in that**,
- to determine the threshold value, the ratio of the strength of the cavitation noise to the strength of the background noise in the error-free state, especially in the new state of the valve (2) is established, and
- the threshold value is selected to be higher than the strength of the background noise measured for diagnosis multiplied by this ratio .

11. Diagnostic method in accordance with claim 10,
**characterized in that**,
- based on consecutive diagnostic measurements a trend statement is derived as to when it is expected that the threshold value will be exceeded.
